# DEMANDE DE BREVET EUROPEEN

(11) **EP 0 724 911 A1**
(43) Date de publication de la demande: **07.08.1996**
(21) Numéro de dépôt: 96400177.0
(22) Date de dépôt: 25.01.1996
(51) Int. Cl.: B03C 1/16, B65G 15/00, B65G 23/44

(54) **Séparateur magnétique à haute intensité du type à rotor et à bande sans fin**

(30) Priorité: 02.02.1995 FR 9501209
(71) Demandeur: F C B, F-93100 Montreuil Cédex (FR)
(72) Inventeur: Barbaret, Pascal, F-42400 Saint Chamond (FR)
(74) Mandataire: Fontanié, Etienne

(57) **Abrégé**

L'invention a pour objet un séparateur magnétique comprenant un châssis (16) supportant un rotor (12) et un rouleau de renvoi (14), une bande san fin (16) tendue entre le rotor et le rouleau de renvoi, et un dispositif de tension de bande, ledit châssis étant logé entre les deux brins de la bande et reposant sur un bâti (25) par ses extrémités qui dépassent la bande sur ses deux côtés.

Pour permettre le remplacement facile et rapide de la bande, l'une des extrémités du châssis (10) est fixée rigidement sur le bâti (25) tandis que son autre extrémité repose sur le bâti par l'intermédiaire d'une cale (29) située au niveau du brin inférieur de la bande, et le dispositif de tension de bande (28, 30, 32) est conçu pour pouvoir être rendu inactif facilement et permettre de détendre la bande.

## Description

La présente invention concerne les séparateurs magnétiques à haute intensité destinés à la séparation des produits à faible susceptibilité magnétique et comportant un rotor consistant en un empilage de pièces polaires et d'aimants permanents en forme de disques, disposés en alternance sur un arbre, un rouleau de renvoi dont l'axe est parallèle à celui du rotor, et une bande sans fin tendue entre le rouleau et le rotor, ces derniers étant disposés de telle sorte que le plan du brin supérieur de la bande soit approximativement horizontal. Le rotor est accouplé à un groupe moto-réducteur qui l'entraine en rotation. Ces appareils sont équipés en outre de dispositifs de tension de bande qui exercent sur celle-ci des efforts de traction suffisants pour permettre son entraînement, sans glissement, par le rotor mais limités pour réduire les risques de déchirure de la bande.

Dans ces appareils la bande sert, d'une part, à amener les produits à trier sur le rotor et à évacuer les particules magnétiques séparées et, d'autre part, à protéger le rotor contre l'encrassement et l'abrasion. Elle est réalisée en un matériau non magnétique et a une épaisseur très faible, de l'ordre de 1/10 de mm, pour ne pas affecter de manière appréciable les performances du rotor. A cause de sa faible épaisseur, cette bande s'use et se détériore rapidement et il est nécessaire de la changer fréquemment.

Pour résoudre le problème posé par l'usure et/ou la détérioration rapide de la bande, une solution connue consiste à réaliser un ensemble interchangeable constitué par le châssis, le rotor, le rouleau de renvoi et la bande et, en cas de nécessité, à remplacer l'ensemble défectueux par un ensemble identique équipé d'une bande neuve ; après remise en marche du séparateur, la bande usagée ou détériorée peut être remplacée dans un atelier d'entretien sans perturber la marche de l'usine où cet appareil est installé. Cette solution est coûteuse, car elle nécessite l'achat de deux ensembles pour un seul appareil.

Le but de la présente invention est de réaliser un séparateur magnétique qui soit conçu de telle sorte qu'il soit possible, par des opérations simples et ne nécessitant pas d'outillage spécial, de remplacer rapidement une bande défectueuse sur le lieu d'utilisation.

Le séparateur magnétique objet de la présente invention est caractérisé en ce que le châssis portant le rotor et le rouleau de renvoi est constitué par une poutre placée entre le rotor et le rouleau et logée entre les deux brins de la bande, les deux extrémités du châssis de la poutre dépassant les deux bords de la bande, en ce que l'une des extrémités du châssis est fixée rigidement sur un bâti support tandis que son autre extrémité repose sur le bâti par l'intermédiaire d'une cale amovible située approximativement au niveau du brin de la bande adjacent au plan d'appui du châssis sur le bâti, de telle sorte que, lorsque ladite cale est enlevée, le châssis est supporté en porte-à-faux par le bâti et il subsiste, entre le bâti et le châssis, à l'autre extrémité de ce dernier, un espace permettant le démontage de la bande et son remontage, et en ce que le dispositif de tension de bande peut être rendu inactif pour réduire la tension de la bande.

Pour réduire les contraintes mécaniques dans les moyens de fixation du châssis sur le bâti lorsque le châssis est en porte-à-faux, il sera avantageux d'équilibrer au moins en partie le poids de l'ensemble châssis-rotor-rouleau par un contrepoids ; une solution particulièrement intéressante consiste à utiliser à cette fin le groupe moto-réducteur entraînant le rotor en rotation.

Le dispositif de tension de bande peut être constitué par des ressorts agissant sur les extrémités du rouleau de renvoi, chaque ressort prenant appui sur une butée mobile déplaçable entre une première position (position travail) où le ressort est comprimé et la bande tendue et une seconde position (position démontage) où le ressort et la bande sont détendus. Dans cette forme de réalisation, la butée peut être constituée par un piston monté coulissant dans un fourreau tubulaire fixé sur le châssis avec son axe approximativement parallèle à la direction de déplacement de la bande, ce piston étant muni d'une tige qui traverse la paroi du fourreau et peut être déplacée dans une fente ménagée dans cette paroi, cette fente comprenant deux portions rectilignes approximativement parallèles à l'axe du fourreau et de longueurs inégales, circonférentiellement espacées l'une de l'autre et reliées entre elles à leur extrémité la plus proche du rouleau mobile par une portion transversale, de telle sorte que lorsque la tige se trouve à l'extrémité de la portion rectiligne courte la plus éloignée de cette portion transversale le ressort est comprimé (position travail) et lorsqu'elle se trouve à l'extrémité de la portion rectiligne longue la plus éloignée de la portion transversale le ressort est détendu (position démontage). De préférence, la tige a une longueur suffisante pour pouvoir être utilisée par un opérateur pour manoeuvrer le piston et le déplacer de la première position à la seconde et vice-versa.

Suivant une autre forme de réalisation , le dispositif de tension de bande est constitué par deux vérins pneumatiques reliés à une même source d'air comprimé et aptes à exercer sur les deux extrémités du rouleau de renvoi des forces égales tendant à écarter celui-ci du rotor, et par des ressorts de rappel aptes à rapprocher les rouleaux de renvoi du rotor lorsqu'on coupe l'alimentation des vérins.

On pourra prévoir, en outre, des moyens permettant d'exercer sur la bande une pré-tension inférieure à la tension normale de fonctionnement, en déplaçant le rouleau de renvoi, lorsque le dispositif de tension est inactif.

Les caractéristiques de l'invention apparaitront plus clairement à la lecture de la description qui suit et se réfère aux dessins l'accompagnant qui montrent, à titre d'exemple non limitatif, deux formes de réalisation de l'invention et sur lesquels :
La figure 1 est une vue en plan de l'ensemble rotor, rouleau et chassis, sans la bande, d'un séparateur magnétique à haute intensité conforme à l'invention ;
La figure 2 est une vue en bout à plus grande échelle, de l'ensemble de la figure 1, certaines parties étant montrées en coupe ;
La figure 3 est une vue en élévation, en position travail, du dispositif de tension de bande;
La figure 4 est une vue, similaire à la figure 3, montrant le dispositif de tension de bande en position démontage ;
La figure 5 est une vue en bout, analogue à la figure 2, illustrant une autre forme de réalisation de l'invention ;

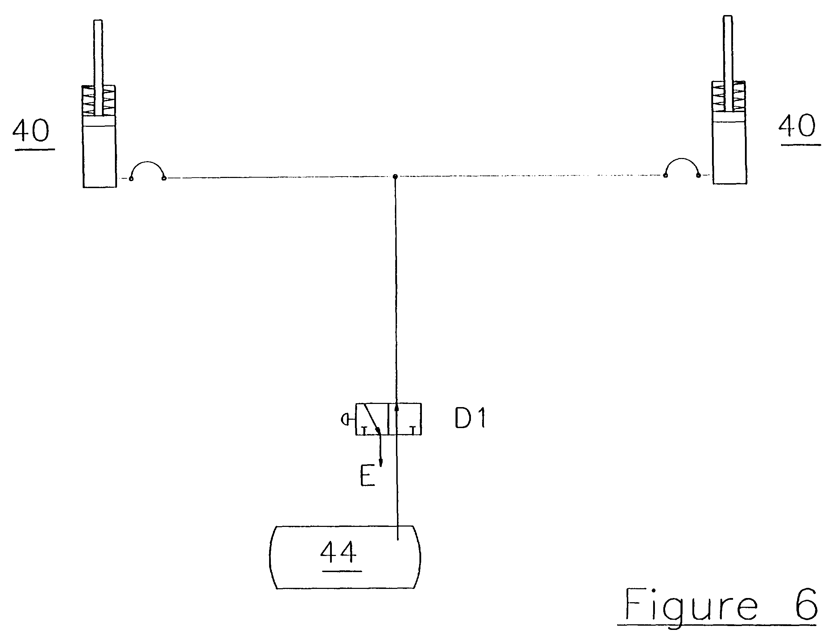

La figure 6 est le schéma du circuit d'alimentation des vérins pneumatiques utilisés dans la forme de réalisation de la figure 5 , et
La figure 7 est une vue en élévation du séparateur magnétique pendant un changement de bande.

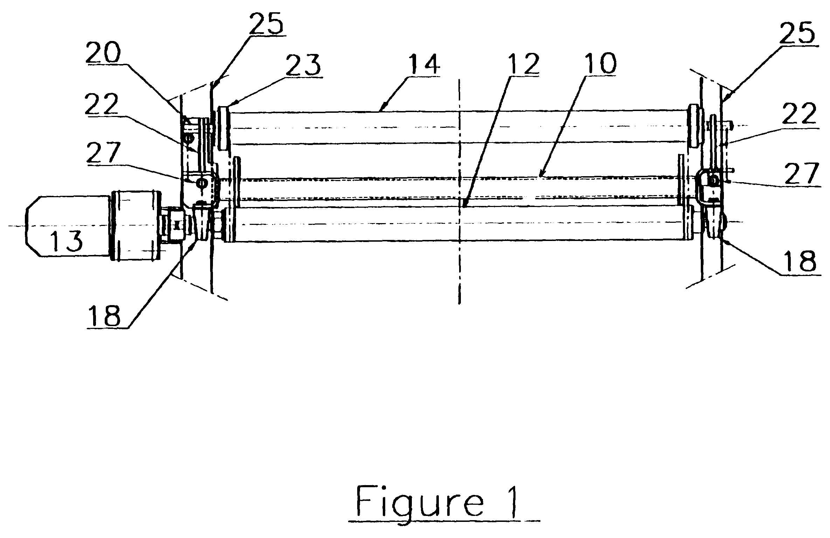

Le séparateur magnétique représenté sur les figures 1, 2 et 7 est constitué essentiellement par un chassis 10, deux rouleaux à axe horizontal 12 et 14 et une bande 16 tendue entre les deux rouleaux. Le rouleau 12 est un rotor magnétique constitué par un empilage d'aimants permanents et de pièces polaires en forme de disques, et la bande 16 sert à amener sur le rotor les produits à trier, déversés en A, et à évacuer les particules magnétiques qui sont collectées en B, les particules non magnétiques étant déchargées en C. Il est muni à ses extrémités de bouts d'arbres montés sur des paliers 18 fixés sur le chassis 10 et il est entraîné en rotation par un groupe moto-réducteur 13. Le rouleau 14 est monté fou sur un arbre 20 dont les extrémités peuvent coulisser dans des glissières horizontales 24 prévues dans deux flasques 22 du châssis 10. Il est muni à chacune de ses extrémités d'une collerette 23 qui assure le centrage de la bande.

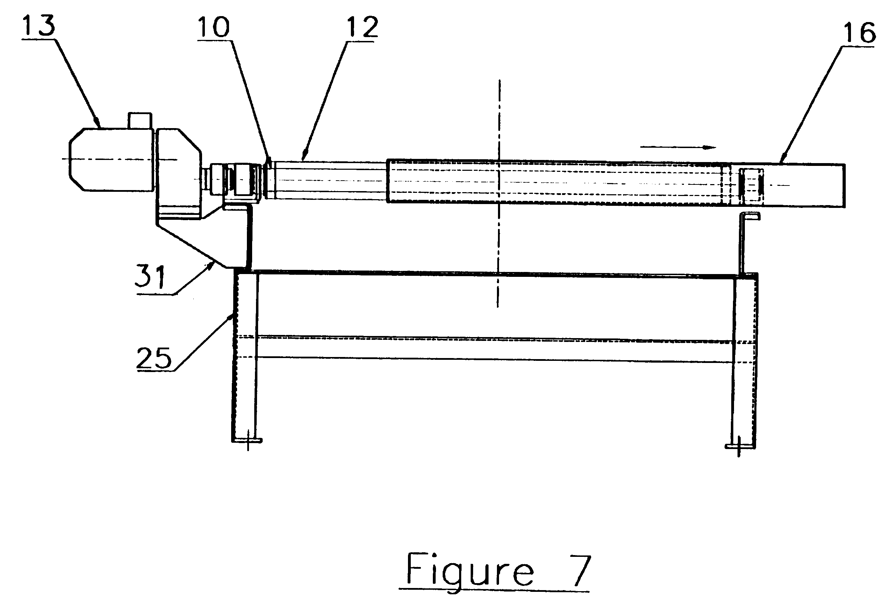

Le châssis 10 est constitué par une poutre disposée entre les rouleaux 12 et 14 et est conçu pour qu'il soit possible de mettre la bande en place sur les rouleaux et de l'enlever pour la remplacer en la faisant glisser sur les rouleaux. Pour cela, le châssis est fixé seulement par ses deux extrémités, qui dépassent la bande sur ses deux côtés, sur un bâti support 25 au moyen de vis 27. L'extrémité du châssis adjacente au groupe moto-réducteur est fixée sur le bâti par l'intermédiaire d'une console 31 et de vis 27 qui réalisent une fixation rigide ; l'autre extrémité repose sur le bâti par l'intermédiaire d'une cale 29. Cette cale est située approximativement au niveau du brin inférieur de la bande, de sorte qu'après avoir dévissé la vis 27 assurant la fixation de cette extrémité du châssis sur le bâti et retiré la cale 29, un opérateur peut enlever la bande, si elle est suffisamment détendue, en la tirant vers lui et en la faisant glisser sur les rouleaux, et mettre en place une bande neuve en effectuant les opérations inverses ; cette opération est illustrée par la figure 7. Pendant ces opérations, le châssis est supporté en porte-à-faux par le bâti et un espace suffisant est ménagé, par enlèvement de la cale 29, entre l'extrémité libre du châssis et le bâti pour permettre le passage de la bande.

Comme on le voit sur la figure 7, le groupe moto-réducteur 13 est monté sur la console 31 qui prolonge le châssis 10 au-delà du bâti 25, de sorte que son poids équilibre partiellement le poids de l'ensemble châssis-rotor-rouleau de renvoi lorsque celui-ci est en porte-à-faux, ce qui réduit les contraintes mécaniques dans les moyens de fixation du châssis sur le bâti et dans ce dernier. Eventuellement, l'équilibrage peut être complété par un contrepoids disposé du même côté que le groupe 13 par rapport au bâti ; cette solution peut être utile pour des séparateurs de grosse capacité équipés d'un rotor de grand diamètre.

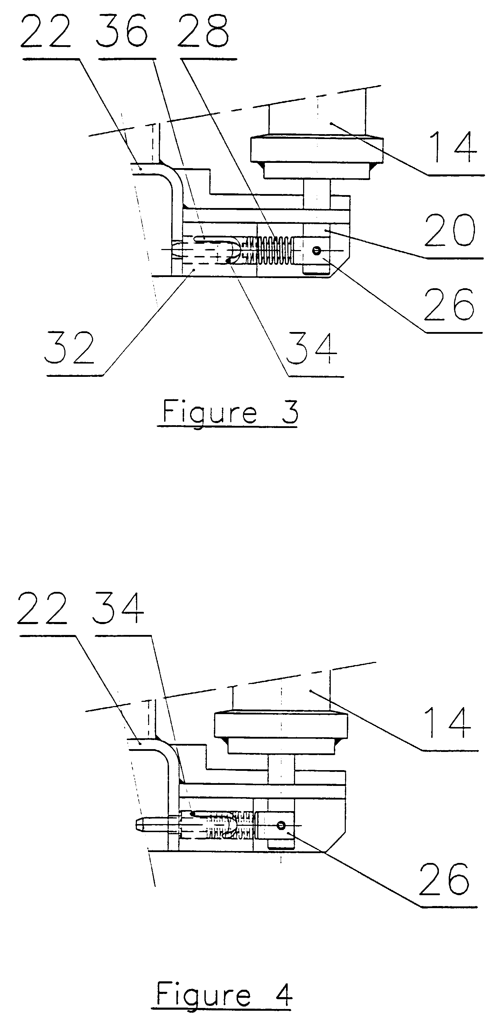

Le séparateur magnétique est en outre équipé d'un dispositif de tension de bande qui peut être rendu inactif pour permettre le démontage de la bande et son remplacement. Ce dispositif comporte, à chaque extrémité du châssis 10, une fourchette 26 qui est fixée par une articulation sur l'extrémité de l'arbre 20, un ressort hélicoïdal 28 et un piston 30 montés sur la queue de la fourchette, et un fourreau 32 qui est fixé sur le flasque 22 du châssis et dans lequel coulisse le piston 30. Ce dernier est muni d'une tige 34 qui traverse la paroi du fourreau et peut être déplacée dans une fente 36 comportant deux portions rectilignes de longueurs inégales, parallèles à l'axe du fourreau, et une portion transversale, courbe reliant les deux extrémités des portions rectilignes les plus proches du rouleau 14. La tige 34 permet de déplacer le piston 30 entre une position travail (figure 3) telle que le ressort 28 est comprimé entre la tête de la fourchette et le piston et maintient la bande tendue, et une position démontage (figure 4) autorisant le recul du rouleau 14 pour donner du mou à la bande et permettre son remplacement. Dans la position travail, la tige 34 se trouve à l'extrémité la plus éloignée du rouleau 14 de la portion rectiligne courte de la fente 36, tandis que dans la position démontage, elle se trouve à l'extrémité la plus éloignée du rouleau 14 de l'autre portion rectiligne de la fente.

Lorsque le piston est dans la position travail, les ressorts 28 exercent sur le rouleau 14 une poussée qui permet de tendre la bande avec un effort suffisant pour qu'elle soit entraînée sans glissement par le rouleau 12. Cette poussée dépend de l'état de compression des ressorts et est choisie pour que les efforts de traction qui s'exercent sur la bande restent inférieurs à la résistance à la traction de cette dernière et que les risques de déchirure soient limités. Elle pourrait être réglée, par exemple, au moyen de rondelles interposées entre la tête de la fourchette 26 et le ressort 28 ou entre celui-ci et le piston 30. Ce réglage peut être nécessaire, lorsqu'on remplace la bande, si la longueur de la nouvelle bande diffère sensiblement de celle de la bande remplacée ou si la bande n'a pas exactement la même longueur sur ces deux bords.

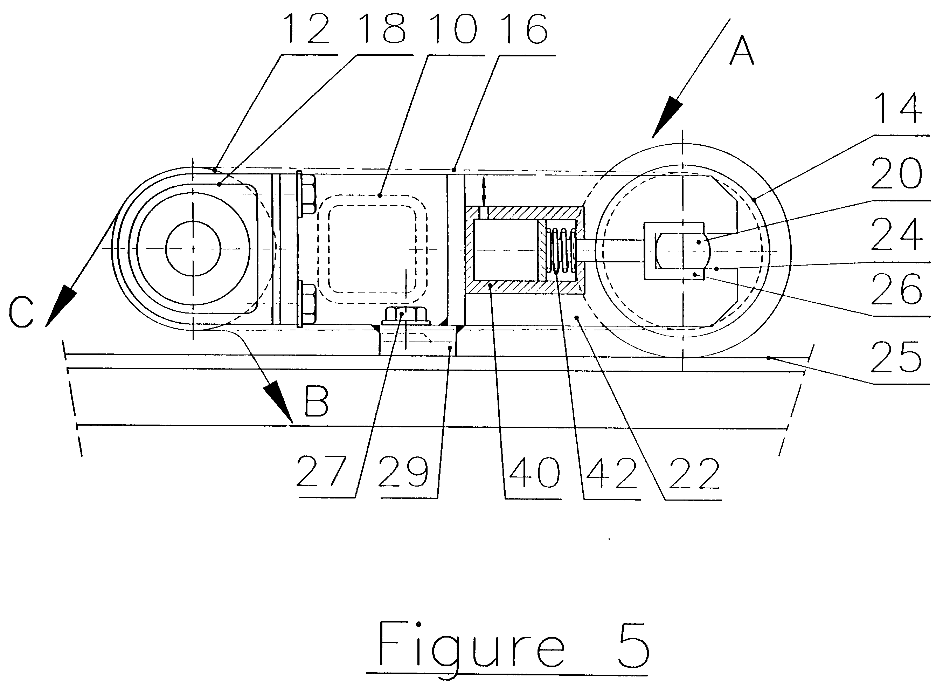

Selon la forme de réalisation représentée sur la figure 5, le dispositif de tension de bande est constitué par deux vérins pneumatiques 40 dont les corps sont fixés sur le châssis 10, à ses deux extrémités, et dont les tiges de piston sont articulées sur les extrémités de l'arbre 20 du rouleau de renvoi 14. Ces vérins sont munis de ressorts de rappel 42. Les chambres des vérins sont reliées à une source d'air comprimé à pression régulée 44 à travers une vanne à commande manuelle 46.

Quand l'appareil est en marche, les vérins sont alimentés en air comprimé par la source 44 et exercent sur les deux extrémités du rouleau 14 des efforts égaux et connus, et la bande est donc soumise à une tension uniforme sur toute sa largeur.

Pour changer la bande, on coupe l'alimentation en air comprimé des chambres des vérins et on les met en communication avec l'atmosphère ; l'effort de rappel que les ressorts 42 exercent sur l'arbre 20 permet de rapprocher le rouleau 14 du rotor 12. La bande est alors détendue et peut être enlevée et remplacée après que l'on ait retiré la cale 29. A la place des vérins à simple effet équipés de ressorts de rappel on pourrait évidement utiliser des vérins à double effet, le recul du rouleau de renvoi étant commandé dans ce cas par admission d'air comprimé sur la face opposée du piston des vérins.

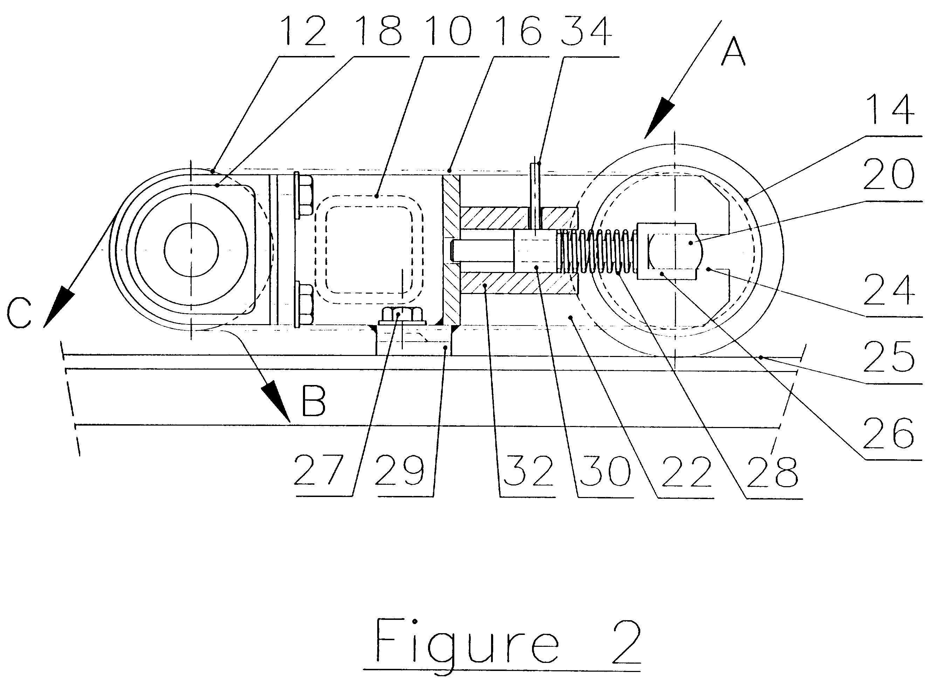

Si le dispositif de tension de bande est conçu de telle sorte qu'il ne permet pas ou ne permet que difficilement de démonter la bande lorsqu'il est inactif, parce que la bande n'est pas suffisamment lâche, comme c'est le cas, par exemple, du dispositif faisant l'objet du brevet français n° 94 09617, on pourra lui adjoindre un dispositif de pré-tension de bande permettant de modifier l'écartement entre le rotor et le rouleau de renvoi. Celui-ci pourra, par exemple, être monté sur le châssis comme décrit en référence aux figures 1 et 2, et le dispositif de pré-tension pourra être constitué par des fourchettes articulées sur les extrémités de l'arbre du rouleau, chaque fourchette comportant une partie filetée sur laquelle sera vissé un écrou prenant appui sur un élément du châssis formant butée ; en vissant ou dévissant l'écrou on pourra écarter ou rapprocher le rouleau de renvoi du rotor. La rotation de chaque écrou pourra être commandée à travers un embrayage à friction ou un dispositif équivalent pour limiter la pré-tension de la bande.

Il est bien entendu que toutes les formes de réalisation qui découlent de celles décrites par la substitution de moyens techniques équivalents entrent dans le cadre de l'invention.

## Revendications

1. Séparateur magnétique comprenant un châssis supportant un rotor et un rouleau de renvoi, dont les axes sont parallèles entre eux, une bande sans fin tendue entre le rotor et le rouleau de renvoi et un dispositif de tension de bande, ledit châssis étant constitué par une poutre logée entre les deux brins de la bande et reposant sur un bâti par ses extrémités qui dépassent la bande sur ses deux côtés, caractérisé en ce que l'une des extrémités du châssis (10) est fixée rigidement sur le bâti (25) tandis que son autre extrémité repose sur le bâti par l'intermédiaire d'une cale amovible (29) située au niveau du brin de la bande (16) adjacent au plan d'appui du bâti de telle sorte que, lorsque ladite cale est enlevée, le châssis est supporté en porte-à-faux par le bâti et il subsiste entre le bâti et le châssis, à l'autre extrémité de ce dernier, un espace permettant le démontage de la bande et son remontage, et en ce que le dispositif de tension de bande peut être rendu inactif pour réduire la tension de la bande.

2. Séparateur magnétique selon la revendication 1, caractérisé en ce que le dispositif de tension de bande est constitué par des ressorts (28) agissant sur les deux extrémités de l'arbre du rouleau de renvoi (14), qui sont déplaçables dans une direction approximativement parallèle aux brins de la bande, et en ce que chaque ressort prend appui sur une butée mobile (30) déplaçable entre une première position (position travail) où le ressort est comprimé et la bande (16) tendue et une seconde position (position démontage) où le ressort et la bande sont détendus.

3. Séparateur magnétique selon la revendication 2, caractérisé en ce que la butée mobile (30) est constituée par un piston monté coulissant dans un fourreau (32) fixé sur le châssis (10) avec son axe approximativement parallèle à la direction de transport de la bande (16), en ce que ledit piston est muni d'une tige (34) qui traverse la paroi du fourreau et peut être déplacée dans une fente (36) ménagée dans cette paroi, et en ce que ladite fente comprend deux portions rectilignes, approximativement parallèles à l'axe du fourreau, de longueurs inégales et reliées entre elles à leur extrémité la plus proche du rouleau mobile par une portion transversale, de telle sorte que lorsque la tige se trouve à l'extrémité de la portion rectiligne courte la plus éloignée de cette portion transversale le ressort est comprimé et lorsqu'elle se trouve à l'extrémité de la portion rectiligne longue la plus éloignée de la portion transversale le ressort est détendu.

4. Séparateur magnétique selon la revendication 3, caractérisé en ce que la tige (34) a une longueur suffisante pour pouvoir être utilisée par un opérateur pour manoeuvrer le piston (30) de la première position à la seconde et vice-versa.

5. Séparateur magnétique selon la revendication 1, caractérisé en ce que le dispositif de tension de bande est constitué par deux vérins pneumatiques (40) reliés à une même source d'air comprimé (44) et aptes à exercer sur les deux extrémités du rouleau de renvoi (14) des forces égales tendant à écarter celui-ci du rotor (12), et par des ressorts de rappel (42) aptes à rapprocher le rouleau de renvoi du rotor lorsqu'on isole les vérins de la source d'air comprimé.

6. Séparateur magnétique selon une quelconque des revendication précédentes, caractérisé en ce qu'il comporte en outre des moyens permettant d'exercer sur la bande une pré-tension inférieure à la tension normale de fonctionnement, en déplaçant le rouleau de renvoi, lorsque le dispositif de tension de bande est inactif.

7. Séparateur magnétique selon la revendication 1, caractérisé en ce qu'il comporte un contrepoids disposé sur un prolongement du châssis (10), au-delà du bâti (25) de façon à équilibrer au moins partiellement le poids de l'ensemble châssis-rotor-rouleau de renvoi lorsqu'il est en porte-à-faux.

8. Séparateur magnétique selon la revendication 7, caractérisé en ce que ledit contrepoids est constitué, au moins en partie, par le groupe moto-réducteur (13) entraînant le rotor en rotation.
